# EUROPÄISCHE PATENTANMELDUNG

(11) **EP 3 075 705 A1**
(43) Veröffentlichungstag der Anmeldung: **05.10.2016**
(21) Anmeldenummer: 16000388.5
(22) Anmeldetag: 16.02.2016
(51) Int. Cl.: C01B 3/38

(54) **VERFAHREN UND ANLAGE ZUR DAMPFREFORMIERUNG**

(30) Priorität: 31.03.2015 DE 102015004122
(71) Anmelder: Linde Aktiengesellschaft, 80331 München (DE)
(72) Erfinder: Seliger, Andreas, 80796 München (DE); Mabrouk, Rachid, 81477 München (DE); Vogel, Wolfgang, 82131 Gauting (DE); Lemme, Volkmar, 80997 München (DE)
(74) Vertreter: Fischer, Werner

(57) **Zusammenfassung**

Die Erfindung betrifft ein Verfahren zur Herstellung von Synthesegas, umfassend die Schritte: Bereitstellen eines Einsatzgasstromes, wobei der Einsatzgasstrom einen Kohlenwasserstoff, vorzugsweise Methan und Wasserdampf umfasst, Erwärmen zumindest eines Teils des Einsatzgasstromes in einem ersten Dampfreformers unter Verwendung von Verbrennungshitze, und Umsetzen des erwärmten Einsatzgasstrom zu einem Synthesegasstrom umfassend CO und H₂ in einem Reformierungsschritt. Erfindungsgemäß ist vorgesehen, dass zumindest ein Teil des Einsatzgasstroms außerhalb des ersten Dampfreformers zumindest zum Teil unter Einsatz von elektrischer Energie erwärmt wird.

## Beschreibung

Die Erfindung betrifft ein Verfahren und eine Anlage zur Herstellung von Synthesegas.

Ein solches Verfahren umfasst die Schritte Bereitstellen eines Einsatzgasstromes, wobei der Einsatzgasstrom mindestens einen Kohlenwasserstoff, vorzugsweise Methan, Wasserdampf und optional einen Kohlenwasserstoff mit mindestens 2 Kohlenstoffatomen umfasst, Erwärmen zumindest eines Teils des Einsatzgasstromes in einem ersten Dampfreformer unter Verwendung von Verbrennungshitze und Umsetzen des erwärmten Einsatzgasstrom zu einem Synthesegasstrom umfassend CO und H₂ in einem Reformationsschritt.

Der erste Dampfreformer umfasst dabei zumindest ein erstes Reformerrohr und eine Brennkammer, wobei der besagte mindestens eine Teil des Einsatzgasstromes im Reformerrohr erwärmt wird und ggf. vor Einbringen in das Reformerrohr durch die Brennkammer des ersten Dampfreformer geführt und dort vorgewärmt wird.

In Verfahren zur Herstellung von Synthesegas wie etwa in der autothermen Reformierung (ATR), der partiellen Oxidation (POX) oder der Dampf-Methan-Reformierung (SMR) werden Kohlenwasserstoffströme und Prozessströme vorgewärmt, zum Beispiel durch heiße Prozess- oder Produktströme oder in Brennkammern, bevor sie in den Reformationsreaktor überführt werden.

In Falle der Dampf-Methan-Reformierung wird für die endotherme Synthesegasreaktion Reaktionswärme benötigt, die typischerweise durch die Oxidation eines Brennstoffstromes in der Brennkammer eines Dampfreformers bereitgestellt wird. Bei dem Brennstoffstrom handelt es sich meist um Erdgas oder brennbare Restgase aus der Synthesegasherstellung oder nachfolgenden Verfahrensschritten. Die Brennkammer umgibt dabei die Reformerrohre, in denen die Umsetzung zu Synthesegas durchgeführt wird. In den anderen, oben genannten Verfahren (ATR, POX) wird die benötigte Reaktionswärme an Ort und Stelle durch partielle Oxidation bereitgestellt.

Nachteilig ist dabei, dass durch die oben genannte Bereitstellung der Reaktionswärme einerseits Brennstoffe aufgewendet werden müssen, und sich andererseits dadurch der Kohlendioxidausstoß der Synthesegasherstellung erhöht.

Basierend auf diesem Hintergrund ist es daher die Aufgabe der vorliegenden Erfindung, ein technisch einfaches und wirtschaftliches Verfahren zur Herstellung von Synthesegas bereitzustellen, das sich insbesondere einfach in bereits bestehende Verfahren und Anlagen integrieren lässt.

Diese Aufgabe wird dadurch gelöst, dass zumindest ein Teil des Einsatzgasstroms außerhalb des ersten Dampfreformers zumindest zum Teil unter Einsatz von elektrischer Energie erwärmt wird.

Die vorgeschlagene Erfindung bietet mehrere Vorteile. Durch die Verwendung der elektrischen Heizleistung kann der Brennstoffbedarf und die Kohlendioxidemission der Synthesegasherstellung reduziert werden. Des Weiteren wird der Wärmewirkungsgrad des Verfahrens durch die Verwendung von elektrischer Heizleistung erhöht. Insbesondere ist es durch die vorgeschlagene Erfindung möglich, Überkapazitäten bei der Stromversorgung wirtschaftlich und ökologisch sinnvoll abzufangen. Das erfindungsgemäße Verfahren kann flexibel betrieben werden, so dass die zugeführte elektrische Heizleistung den aktuellen Strompreisen angepasst werden kann, um das Verfahren so wirtschaftlich wie möglich zu betreiben. Des Weiteren kann das erfindungsgemäße Verfahren in bereits bestehende Anlagen integriert werden, die dafür nur minimal nachgerüstet werden müssen.

In einigen Ausführungsformen der Erfindung wird der mindestens eine Teil des Einsatzgasstroms induktiv erwärmt. Eine induktive Erwärmung bezeichnet im Sinne der Erfindung einen Vorgang, bei dem ein elektrisch leitfähiger Körper durch in ihm erzeugte Wirbelstromverluste erhitzt bzw. erwärmt wird. Vorzugsweise ist dabei der zu erwärmende, elektrisch leitfähige Körper als Rohr ausgebildet, der den mindestens einen Teil des Einsatzgasstroms führt, so dass dieser Teil im Inneren des elektrisch leitfähigen Körpers ebenfalls erwärmt wird. Typischerweise wird ein solcher Wirbelstrom im elektrisch leitfähigen Körper durch eine um den Körper angeordnete Spule induziert, durch die ein (z.B. nieder- oder mittelfrequenter) Wechselstrom fließt. Vorteilhafterweise ist um den zu erwärmenden, elektrisch leitfähigen Körper eine wärmeisolierende Ummantelung angeordnet.

In einigen Ausführungsformen der Erfindung wird die Verbrennungshitze durch die Verbrennung eines Brennstoffes mit einem sauerstoffhaltigen Gasstrom bzw. in Gegenwart von Sauerstoff bereitgestellt. Der Brennstoff kann dabei vorteilhafterweise durch den Einsatzgasstrom selbst oder durch Restgase bereitgestellt werden, die in der weiteren Aufarbeitung oder Weiterverarbeitung des Synthesegases auftreten können.

In einigen Ausführungsformen der Erfindung beträgt der Teil des Einsatzgasstroms, der außerhalb des ersten Dampfreformers durch elektrische Energie erwärmt wird, zwischen 0 Vol. % und 80 Vol. % des Einsatzgasstroms, wobei der Teil des Einsatzgasstroms vorzugsweise induktiv auf eine Temperatur im Bereich von 300°C bis 650°C erwärmt werden kann. In einigen Ausführungsformen der Erfindung beträgt der Teil des Einsatzgasstroms, der durch elektrische Energie erwärmt wird, zwischen 10 Vol. % und 80 Vol. %, zwischen 20 Vol. % und 70 Vol. %, zwischen 30 Vol. % und 60 Vol. % oder zwischen 40 Vol. % und 50 Vol. % des Einsatzgasstroms. Bevorzugt wird dazu dieser Teil des Einsatzgastroms durch eine Rohrleitung in eine elektrische Heizvorrichtung geführt, worin der Teil dann erwärmt wird.

In einigen Ausführungsformen der Erfindung wird der verbliebene Teil des Einsatzgasstromes durch die Brennkammer des Dampfreformers und anschließend in das erste Reformerrohr geführt und dabei erwärmt wird. Zweckmäßigerweise wird der verbliebene Teil durch eine Rohrleitung durch die Brennkammer des ersten Dampfreformers geführt. Durch das Führen des verbliebenen Teils des Einsatzgasstroms wird die Rohrleitung vorteilhafterweise vor übermäßiger Erhitzung geschützt.

In einigen Ausführungsformen der Erfindung wird der durch die elektrische Heizvorrichtung erwärmte Teil des Einsatzgasstroms anschließend im Dampfreformer unter Verwendung von Verbrennungshitze weiter auf eine Temperatur im Bereich von 750°C bis 950°C erwärmt. Bevorzugt wird dieser Teil des Einsatzgasstroms in dem mindestens einen ersten Reformerrohr des ersten Dampfreformers erwärmt, wobei das mindestens eine erste Reformerrohr von einer Brennkammer umgeben ist, in welcher der oben genannte Brennstoff unter Entstehung von Wärme verbrannt wird, und wobei die entstehende Wärme auf das mindestens eine erste Reformerrohr und damit auch auf den Einsatzgasstrom übertragen wird.

In einigen alternativen Ausführungsformen der Erfindung wird der Einsatzgasstrom in einen ersten und einen zweiten Einsatzgasteilstrom aufgeteilt. Dabei wird der erste Einsatzgasteilstrom im ersten Dampfreformer unter Verwendung von Verbrennungshitze erwärmt, vorzugsweise auf eine Temperatur im Bereich von 750° bis 950°C, und zu einem ersten Synthesegasstrom umgesetzt, und der zweite Einsatzgasteilstrom wird unter Einsatz von elektrischer Energie erwärmt, vorzugsweise auf eine Temperatur im Bereich von 750°C bis 950°C, und in einem zweiten Dampfreformer zu einem zweiten Synthesegasstrom umgesetzt.

In einigen Ausführungsformen der Erfindung wird der erste Einsatzgasteilstrom durch eine Rohrleitung durch die Brennkammer des ersten Dampfreformers geführt, wodurch der erste Einsatzgasteilstrom erwärmt wird, und anschließend in das mindestens eine erste Reformerrohr, worin der erste Einsatzgasteilstrom weiter erwärmt wird.

In einigen Ausführungsformen der Erfindung wird der zweite Einsatzgasteilstrom in zumindest einem zweiten Reformerrohr erwärmt, wobei das mindestens eine zweite Reformerrohr von dem zweiten Dampfreformer umfasst ist und unter Verwendung von elektrischer Energie vorzugsweise induktiv erwärmt wird.

In einigen Ausführungsformen der Erfindung werden der erste Synthesegasstrom und der zweite Synthesegasstrom zu einem Synthesegasstrom vereinigt.

In einigen alternativen Ausführungsformen der Erfindung ist vorgesehen, dass ein Teil des Einsatzgasstromes außerhalb des ersten Dampfreformers unter Einsatz von elektrischer Energie erwärmt wird, vorzugsweise auf eine Temperatur im Bereich von 450°C bis 500°C, und zu einem vorreformierten Einsatzgasteilstrom umgesetzt wird, wobei ein Teil der Kohlenwasserstoffe zu Synthesegas umgesetzt wird. Der vorreformierte Einsatzgasteilstrom wird anschließend in das mindestens eine erste Reformerrohr des ersten Dampfreformers geführt, dort weiter erwärmt und vollständig zu Synthesegas umgesetzt. Alternativ wird der gesamte Einsatzgasstrom wie oben beschrieben erwärmt und vorreformiert.

Gemäß einem weiteren Aspekt der Erfindung wird eine Anlage zur Herstellung von Synthesegas zur Verfügung gestellt. Die Anlage umfasst:
- zumindest eine Rohrleitung, die zum Führen eines Einsatzgasstroms ausgebildet ist,
- einen erster Dampfreformer, der eine Brennkammer, einen Brenner sowie zumindest ein mit der mindestens einen Rohrleitung in Strömungsverbindung stehendes erstes Reformerrohr aufweist, das zumindest teilweise in der Brennkammer angeordnet ist,
- wobei der Brenner dazu ausgebildet ist, in der Brennkammer einen Gasstrom umfassend einen Brennstoff in Gegenwart von Sauerstoff unter Entstehung von Wärme zu verbrennen, so dass die entstehende Wärme auf das erste Reformerrohr übertragbar ist, und
- eine elektrische Heizvorrichtung, die außerhalb des ersten Dampfreformers angeordnet ist und dazu ausgebildet ist, zumindest einen Teil des Einsatzgasstromes zu erwärmen.

Die erfindungsgemäße Anlage ist insbesondere zur Durchführung des erfindungsgemäßen Verfahrens zur Herstellung von Synthesegas geeignet.

Ein Vorteil der erfindungsgemäßen Anlage ist es, dass eine solche Anlage sowohl im konventionelle Betrieb, also durch Bereitstellung der notwendigen Reaktionswärme mittels Verbrennung, wenn kein Strom oder nur Strom zu hohen Preisen verfügbar ist, als auch im hybriden Betrieb gefahren werden kann, wenn Strom zu günstigen Preisen verfügbar ist. Vorteilhafterweise sinkt im hybriden Betrieb der Bedarf an Brennstoff und die Kohlendioxidemission der Anlage. Bereits bestehende konventionelle Anlagen können weiterhin sehr einfach nachgerüstet werden.

In einer Ausführungsform der Erfindung ist die mindestens eine Rohrleitung dazu ausgebildet, den Einsatzgasstrom vor dem Einbringen in das mindestens eine erste Reformerrohr durch die Brennkammer zu führen.

In einigen Ausführungsformen der Erfindung ist vorgesehen, dass die elektrische Heizvorrichtung stromauf des mindestens einen ersten Reformerrohrs angeordnet ist, so dass der mindestens eine Teil des Einsatzgasstroms zunächst durch die Heizvorrichtung und sodann durch den Brenner erwärmbar ist.

In einigen alternativen Ausführungsformen der Erfindung ist vorgesehen, dass die elektrische Heizvorrichtung innerhalb eines zweiten Dampfreformer angeordnet ist, wobei der zweite Dampfreformer zumindest ein zweites Reformerrohr aufweist, und wobei das mindestens eine zweite Reformerrohr in Strömungsverbindung mit der zumindest einen Rohrleitung steht, so dass sie den mindestens einen Teil des Einsatzgasstromes in das mindestens eine zweite Reformerrohr führen kann.

In einigen Ausführungsformen der Erfindung ist vorgesehen, dass die elektrische Heizvorrichtung innerhalb eines Vorreformers angeordnet ist, wobei der Vorreformer mindestens ein Vorreformerrohr umfasst, der Vorreformer stromaufwärts des mindestens einen ersten Reformerrohrs des ersten Dampfreformers angeordnet ist und das mindestens eine Vorreformerrohr in Strömungsverbindung mit der mindestens einen Rohrleitung steht, so dass sie den mindestens einen Teil des Einsatzgasstromes in das mindestens eine Vorreformerrohr führen kann.

In einigen Ausführungsformen der Erfindung ist vorgesehen, dass die elektrische Heizvorrichtung dazu ausgebildet ist, die mindestens eine Rohrleitung, das mindestens eine zweite Reformerrohr oder das mindestens eine Vorreformerrohr zu erwärmen, wobei die Heizvorrichtung bevorzugt eine stromleitende Spule aufweist, die dazu ausgebildet ist, im stromdurchflossenen Zustand einen Wirbelstrom in der mindestens einen Rohrleitung, in dem mindestens einen zweiten Reformerrohr oder in dem mindestens einen Vorreformerrohr zu induzieren.

Weitere Einzelheiten und Vorteile der Erfindung sollen durch die nachfolgenden Figurenbeschreibungen von Ausführungsbeispielen anhand der Figuren erläutert werden.

Es zeigen:
- Fig. 1: ein Schema einer Ausführungsform der Erfindung;
- Fig. 2: ein Schema einer alternativen Ausführungsform der Erfindung; und
- Fig. 3: ein Schema einer weiteren alternativen Ausführungsform der Erfindung.

### Beispiele:

### Beispiel 1:

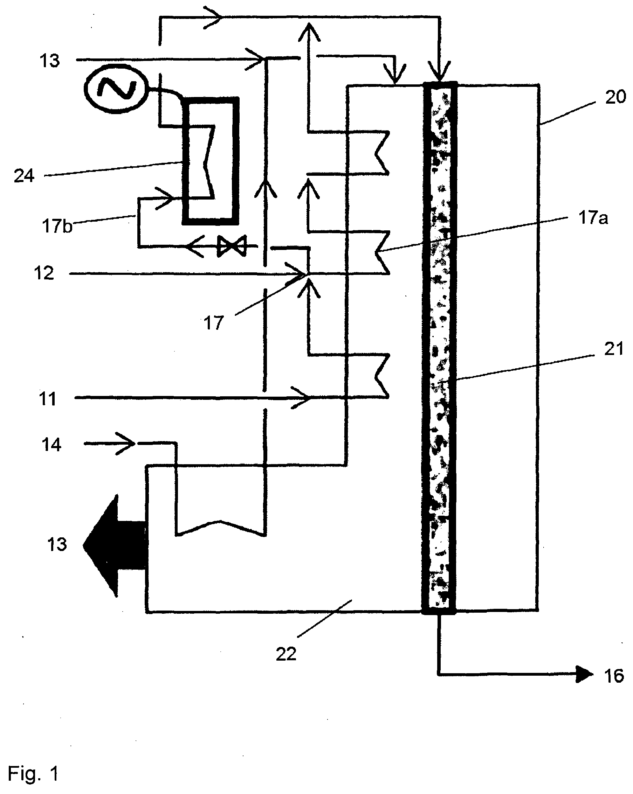

Figur 1 illustriert eine bevorzugte Anlagenform und Verfahrensführung der Erfindung. Ein kohlenwasserstoffhaltiger Gasstrom 11, beispielsweise Erdgas oder Biogas, wird mit Wasserdampf 12 gemischt, und der resultierende Einsatzgasstrom 17 über eine Rohrleitung in einen Dampfreformer 20 geführt und dort zu einem Synthesegasstrom 16 umfassend CO und H₂ umgesetzt. Der Dampfreformer 20 umfasst mindestens ein Reformerrohr 21, eine Brennkammer 22 und einen Brenner. Das Reformerrohr 21 ist mit einem geeigneten Katalysator wie etwa einem Nickel- oder Rutheniumkatalysator ausgestattet und dazu ausgebildet, den eingangs erwähnten Einsatzgasstrom 17 zu Synthesegas umzusetzen. Die dafür benötigte Wärme wird zum Teil durch die Verbrennung eines Brennstoffes 13 mit Luft 14 oder Sauerstoff 14 in der Brennkammer 22 des Dampfreformers 20 zur Verfügung gestellt. Das Reformerrohr 21 ist dabei derartig zur Brennkammer 22 angeordnet, dass die bei der Verbrennung entstehende Wärme durch Wärmestrahlung oder Wärmekonvektion auf das Reformerrohr 21 übertragen werden kann, wodurch das Reformerrohr 21 und in ihm geführte Stoffströme 17 erwärmt werden. Dabei wird zumindest ein Teil 17a des Einsatzgastroms zunächst durch die Brennkammer 22 des ersten Dampfreformers 20 geführt, dort erwärmt und anschließend in das erste Reformerrohr geführt und dort weiter erwärmt.

Erfindungsgemäß ist vorgesehen, dass ein anderer Teil 17b des Einsatzgasstroms zunächst durch eine elektrische Heizvorrichtung 24 erwärmt wird, wobei die elektrische Heizvorrichtung 24 außerhalb des ersten Dampfreformers 20 angeordnet ist, und anschließend in das erste Reformerrohr 21 geführt wird. Dieser Teil 17b des Einsatzgasstroms beträgt vorzugsweise 0 Vol. % bis 80 Vol.%, vorzugsweise 10 Vol. bis 80 Vol. %, des Einsatzgastroms 17. Insbesondere wird der Teil 17b des Einsatzgasstroms 17 auf eine Temperatur von 300°C bis 650°C erwärmt, und anschließend im Reformerrohr 21 auf eine Temperatur von 750°C bis 950°C. Der Einsatzgasteilstrom 17b wird dabei durch Induktionswärme erhitzt. Vorteilhafterweise werden beide Teile 17a, 17b nach dem Erwärmen in der elektrischen Heizvorrichtung 24 bzw. in der Brennkammer 22 miteinander vereinigt, bevor sie in das erste Reformerrohr 21 geführt und dort weiter erwärmt werden.

Die elektrische Heizvorrichtung 24 weist vorteilhafterweise eine stromleitende Spule auf, die um einen Teil der Rohrleitung gewickelt ist. Wird die Spule von einem nieder- oder mittelfrequenten Wechselstrom durchflossen, induziert das sich bildende magnetische Wechselfeld Wirbelströme im besagten Rohrabschnitt. Dabei entsteht die Wärme im Rohrabschnitt selbst und muss nicht durch Wärmeleitung übertragen werden.

Zusätzlich kann die Rohrleitung derart ausgebildet sein, dass der Einsatzgasstrom 17 sowohl durch die elektrische Heizvorrichtung 24 als auch parallel dazu durch die Brennkammer 22 geführt werden kann, und anschließend in das zumindest erste Reformerrohr 21.

Die Erfindung bietet mehrere wirtschaftliche und ökologische Vorteile:
- Gesteigerte Anlagenflexibilität durch die Fähigkeit, die Synthesegasanlage mit elektrischer Wärmeerzeugung und mit Verbrennungswärme zu betreiben;
- Reduktion der operativen Aufwendung durch Reduktion des Erdgasbedarfs;
- Zusätzliche Einnahme durch Auffangen von Überkapazitäten auf den Strommarkt;
- Reduktion der CO₂-Emission: Beispielsweise für eine 50kNm³/h Wasserstoffanlage, bei der das Äquivalent von 25 MW Erdgas zweitweise (30% der Zeit) durch Strom ersetzt wird, beträgt die Reduktion der CO₂ Emission schätzungsweise 50t pro Tag.

### Beispiel 2:

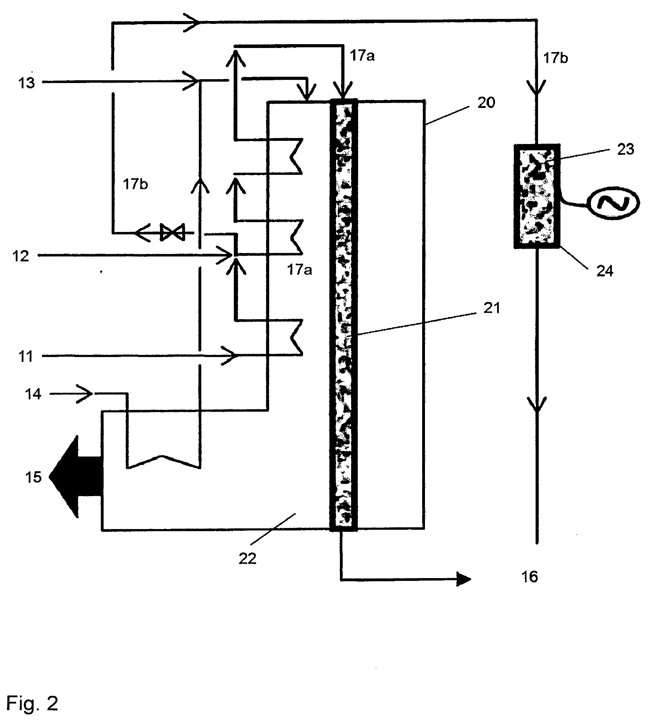

Figur 2 zeigt eine alternative Anlagenform und Verfahrensführung der Erfindung.
Hierbei wird der oben erwähnte Einsatzgasstrom 17 in einen ersten Einsatzgasteilstrom 17a und einen zweiten Einsatzgasteilstrom 17b aufgeteilt. Der erste Einsatzgasteilstrom 17a wird dabei in den ersten Dampfreformer 20 geführt, dort unter Einwirkung der Verbrennungshitze erwärmt, die in der Brennkammer 22 des ersten Dampfreformers 20 erzeugt wird, und zu einem heißen Synthesegasstrom umgesetzt. Der erste Einsatzgasteilstrom 17a kann vorteilhafterweise vor der Einbringung in das erste Reformerrohr 21 durch die Brennkammer 22 geführt und somit vorgewärmt werden.

Der zweite Einsatzgasteilstrom 17b wird in einen zweiten Dampfreformer geführt, der zumindest ein zweites Reformerrohr 23 umfasst. Das zweite Reformerrohr 23 ist ebenfalls vorteilhafterweise mit einem geeigneten Katalysator wie etwa einem Nickel- oder Rutheniumkatalysator ausgestattet. Erfindungsgemäß ist dabei vorgesehen, dass der zweite Dampfreformer mittels einer elektrischen Heizvorrichtung 24 erwärmt wird. Vorteilhafterweise weist die elektrische Heizvorrichtung auch hier eine stromleitende Spule auf, die um das zweite Reformerrohr 23 gewickelt ist. Dabei wird die Wärme, wie in Beispiel 1 beschrieben, direkt im Reformerrohr 23 gebildet.

### Beispiel 3:

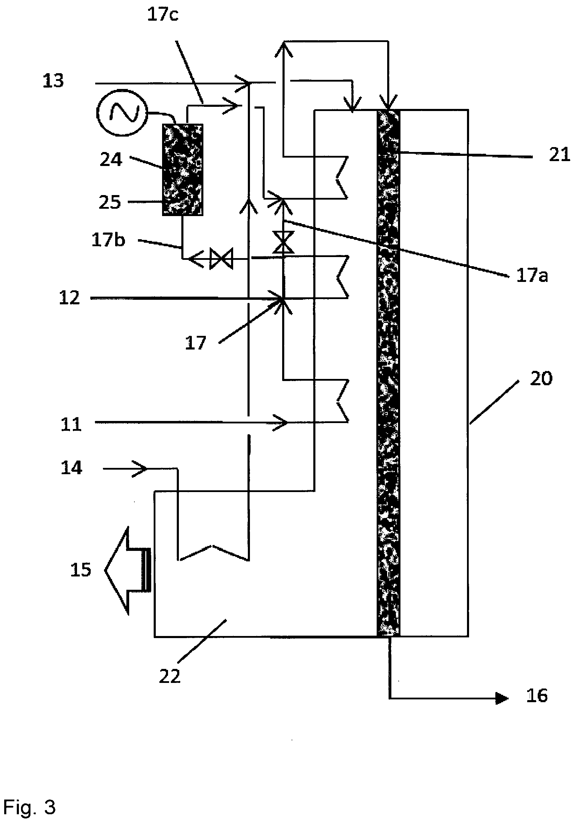

Figur 3 zeigt eine weitere alternative Anlagenform und Verfahrensführung der Erfindung. Hierbei wird ein Einsatzgasstrom 17, der mindestens einen C₁-Kohlenwaserstoff und mindestens einen Kohlenwasserstoff mit 2 oder mehr Kohlenstoffatomen sowie Wasserdampf umfasst, mittels einer Rohrleitung durch die Brennkammer 22 des ersten Dampfreformer 20 geführt und dort auf eine Temperatur im Bereich von 380°C bis 450°C erwärmt. Anschließend wird der erwärmte Einsatzgasstrom 17, in einen ersten Einsatzgasteilstrom 17a und einen zweiten Einsatzgasteilstrom 17b aufgeteilt. Der zweite Einsatzgasteilstrom 17b wird in einen Vorreformer geführt, der mindestens ein Vorreformerrohr 25 aufweist, und dort durch eine elektrische Heizvorrichtung 24 auf eine Temperatur von 450°C bis 500° erwärmt und vorreformiert, wobei das Kohlenwasserstoff mit zwei oder mehreren Kohlenstoffatomen und ein Teil des C₁-Kohlenwasserstoffs zu Synthesegas umgesetzt werden. Dieser nun vorreformierte Einsatzgasteilstrom 17c wird dann anschließend in den ersten Dampfreformer geführt und im ersten Reformerrohr 21 vollständig zu Synthesegas 16 umgesetzt. Alternativ kann auch der gesamte erwärmte Einsatzgasstrom 17 zunächst durch den Vorreformer geführt werden und anschließend in den ersten Dampfreformer 20 bzw. das erste Reformerrohr 21.

Vorteilhafterweise weist die elektrische Heizvorrichtung 24 auch hier eine stromleitende Spule auf, die um das Vorreformerrohr 25 gewickelt ist. Dabei wird die Wärme, wie in Beispiel 1 beschrieben, direkt im Vorreformerrohr 25 gebildet.

Vorteilhafterweise wird auch in dieser Alternative der Erfindung Brennstoff zur Bereitstellung von Reaktionswärme zur Vorreformierung eingespart. Außerdem ist es möglich, den vorreformierten Einsatzgasteilstrom 17c bzw. den gesamten vorreformierten Einsatzgasstrom mit höheren Temperaturen, insbesondere mit 600°C bis 650°C, in das erste Reformerrohr 21 zu führen, ohne dass eine Verkokung des Katalysators im ersten Reformerrohr 21 zu befürchten ist.

**Bezugszeichenliste**

| | |
|---|---|
| 11 | Erdgas |
| 12 | Wasserdampf |
| 13 | Brennstoff |
| 14 | Luft/Sauerstoff |
| 15 | Abgas |
| 16 | heißes Synthesegas |
| 17 | Einsatzgasstrom umfassend Erdgas und Wasserdampf |
| 17a | erster Einsatzgasteilstrom umfassend Erdgas und Wasserdampf |
| 17b | zweiter Einsatzgasteilstrom umfassend Erdgas und Wasserdampf |
| 17c | vorreformierter Einsatzgasteilstrom |
| | |
| 20 | Dampfreformer |
| 21 | Reformerrohr |
| 22 | Brennkammer |
| 23 | Reformerrohr |
| 24 | elektrische Heizvorrichtung |
| 25 | Vorreformerrohr |

## Patentansprüche

1. Verfahren zur Herstellung von Synthesegas, umfassend die Schritte:
- Bereitstellen eines Einsatzgasstromes (17), wobei der Einsatzgasstrom (11) mindestens einen Kohlenwasserstoff (11) sowie Wasserdampf (12) umfasst,
- Erwärmen zumindest eines Teils des Einsatzgasstromes (17) in einem ersten Dampfreformer (20, 21, 22) unter Verwendung von Verbrennungshitze (22), und
- Umsetzen des erwärmten Einsatzgasstroms (17) zu einem Synthesegasstrom umfassend CO und H₂ in einem Reformationsschritt (21),
**dadurch gekennzeichnet,**
**dass** zumindest ein Teil (17b) des Einsatzgasstroms (17) außerhalb des ersten Dampfreformers (20, 21) zumindest zum Teil unter Einsatz von elektrischer Energie (24) erwärmt wird.

2. Verfahren nach Anspruch 1, **dadurch gekennzeichnet, dass** der mindestens eine Teil (17b) des Einsatzgasstroms (17) induktiv (24) erwärmt wird.

3. Verfahren nach der Anspruch 1 oder 2, **dadurch gekennzeichnet, dass** die Verbrennungshitze (22) durch die Verbrennung eines Brennstoffes (13) in Gegenwart von Sauerstoff (14) bereitgestellt wird.

4. Verfahren nach einem der Ansprüche 1 bis 3, **dadurch gekennzeichnet, dass** der mindestens eine Teil (17b) des Einsatzgasstroms (17), der außerhalb des ersten Dampfreformers (20, 21, 22) durch elektrische Energie (24) erwärmt wird, zwischen 0 und 80 Vol. % oder zwischen 10 und 80 Vol. % oder zwischen 20 und 70 Vol. % oder zwischen 30 und 60 Vol. % oder zwischen 40 und 50 Vol. % des Einsatzgasstromes beträgt, wobei der mindestens eine Teil (17b) des Einsatzgasstroms (17) auf eine Temperatur im Bereich von 300°C bis 650°C erwärmt wird.

5. Verfahren nach Anspruch 4, **dadurch gekennzeichnet, dass** der erwärmte mindestens eine Teil (17b) des Einsatzgasstroms (17) anschließend im ersten Dampfreformer (20, 21, 22) unter Verwendung von Verbrennungshitze weiter auf eine Temperatur im Bereich von 750° bis 950°C erwärmt wird.

6. Verfahren nach einem der Ansprüche 1 bis 3, **dadurch gekennzeichnet, dass** der Einsatzgasstrom (17) in einen ersten Einsatzgasteilstrom (17a) und einen zweiten Einsatzgasteilstrom (17b) aufgeteilt wird, wobei:
- der erste Einsatzgasteilstrom (17b) im ersten Dampfreformer (20) unter Verwendung von Verbrennungshitze auf eine Temperatur im Bereich von 750° bis 950° erwärmt und zu einem ersten Synthesegasstrom umgesetzt wird, und wobei
- der zweite Einsatzgasteilstrom (17b) unter Einsatz von elektrischer Energie (24) auf eine Temperatur im Bereich von 750°C bis 950°C erwärmt und in einem zweiten Dampfreformer (23) zu einem zweiten Synthesegasstrom umgesetzt wird.

7. Verfahren nach Anspruch 6, **dadurch gekennzeichnet, dass** der erste Synthesegasstrom und der zweite Synthesegasstrom zu einem Synthesegasstrom (16) vereinigt werden.

8. Verfahren nach einem der Ansprüche 1 bis 3, **dadurch gekennzeichnet, dass** der mindestens eine Teil (17b) des Einsatzgasstromes (17), der außerhalb des ersten Dampfreformer (20) unter Einsatz von elektrischer Energie (24) auf eine Temperatur von 450°C bis 500°C erwärmt, zu einem vorreformierten, synthesegashaltigen Einsatzgasteilstrom (17c) umgesetzt wird, und der vorreformierte Einsatzgasstrom (17c) anschließend in den ersten Dampfreformer (20) in zumindest ein erstes Reformerrohr (21) geführt, dort weiter erwärmt und vollständig zu Synthesegas (16) umgesetzt wird.

9. Anlage zur Herstellung von Synthesegas, umfassend
- zumindest eine Rohrleitung, die zum Führen eines Einsatzgasstroms (17, 17a, 17b) ausgebildet ist,
- einen erster Dampfreformer (20), der eine Brennkammer, einen Brenner sowie zumindest ein mit der mindestens einen Rohrleitung in Strömungsverbindung stehendes erstes Reformerrohr (21) aufweist, das zumindest teilweise in der Brennkammer (22) angeordnet ist,
- wobei der Brenner dazu ausgebildet ist, in der Brennkammer (22) einen Gasstrom umfassend einen Brennstoff (13) in Gegenwart von Sauerstoff (14) unter Entstehung von Wärme zu verbrennen, so dass die entstehende Wärme auf das erste Reformerrohr (21) übertragbar ist,
**gekennzeichnet durch**
eine elektrische Heizvorrichtung (24), die außerhalb des ersten Dampfreformers (20) angeordnet ist und dazu ausgebildet ist, zumindest einen Teil (17b) des Einsatzgasstromes (17) zu erwärmen.

10. Anlage nach Anspruch 9, **dadurch gekennzeichnet, dass** die elektrische Heizvorrichtung (24) stromauf des mindestens einen ersten Reformerrohres (21) angeordnet ist, so dass der mindestens eine Teil (17b) des Einsatzgasstroms (17) zunächst durch die Heizvorrichtung (24) und sodann durch den Brenner erwärmbar ist.

11. Anlage nach Anspruch 9, **dadurch gekennzeichnet, dass** die elektrische Heizvorrichtung (24) innerhalb eines zweiten Dampfreformers angeordnet ist, wobei der zweite Dampfreformer zumindest ein zweites Reformerrohr (23) aufweist, und wobei das mindestens eine zweite Reformerrohr (23) in Strömungsverbindung mit der zumindest einen Rohrleitung steht, die dazu ausgebildet ist, zumindest einen Teil (17b) des Einsatzgasstroms (17) in das zweite Reformerrohr (23) zu führen.

12. Anlage nach Anspruch 9, **dadurch gekennzeichnet dass** die elektrische Heizvorrichtung (24) innerhalb eines Vorreformers angeordnet ist, wobei der mindestens ein Vorreformerrohr (25) umfassende Vorreformer stromaufwärts des mindestens einen ersten Reformerrohrs (21) des ersten Dampfreformers (20) angeordnet ist.

13. Anlage nach einem der Ansprüche 9 bis 12, **dadurch gekennzeichnet, dass** die elektrische Heizvorrichtung (24) dazu ausgebildet ist, die mindestens eine Rohrleitung, das mindestens eine zweite Reformerrohr (23) oder das mindestens eine Vorreformerrohr (25) zu erwärmen, wobei die Heizvorrichtung (24) eine stromleitende Spule aufweist, die dazu ausgebildet ist, im stromdurchflossenen Zustand einen Wirbelstrom in der mindestens einen Rohrleitung, in dem mindestens einen zweiten Reformerrohr (23) oder in dem mindestens einen Vorreformerrohr (25) zu induzieren.
